# EUROPÄISCHE PATENTSCHRIFT

(11) **EP 0 939 308 B1**
(45) Veröffentlichungstag und Bekanntmachung des Hinweises auf die Patenterteilung: **16.04.2008**
(21) Anmeldenummer: 99103184.0
(22) Anmeldetag: 18.02.1999
(51) Int. Cl.: G01H 1/16, G01H 1/00, G01M 13/04

(54) **Vorrichtung zur Erkennung oder zur Analyse von Maschinenschäden**
Apparatus for recognising or analysis of damage to machines
Dispositif pour la réconnaissance ou l'analyse des dommages aux machines

(30) Priorität: 18.02.1998 DE 19806787
(43) Veröffentlichungstag der Anmeldung: 01.09.1999
(73) Patentinhaber: Prüftechnik Dieter Busch AG, 85737 Ismaning (DE)
(72) Erfinder: Lysen, Heinrich, 85748 Garching bei München (DE)
(74) Vertreter: Schwan - Schwan - Schorer

(56) Entgegenhaltungen:
- EP-A- 0 413 845
- US-A- 3 677 072
- US-A- 4 386 526
- US-A- 4 455 862
- US-A- 5 251 151

## Beschreibung

Die Erfindung betrifft eine Vorrichtung zur Erkennung oder zur Analyse von Maschinenschäden, insbesondere zur Erkennung von Fehlern an Wälzlagern. Eine solche Vorrichtung ist bekannt aus der Patentschrift US 3,842,663. In dieser Schrift wird ein Standard-Proplem erläutert, welches bei der Erkennung von Maschinen- oder Lagerschäden auftritt. Dies beruht darauf, dass die von Lagerdefekten oder von anderen defekten Geräteteilen periodisch emittierten Geräusche teilweise wesentlich kleiner sind, als reguläre Geräusche, welche von einer solchen Maschine erzeugt werden und zunächst als Körperschall in Erscheinung treten.

Die in der US 3,842,663 vorgestellte Lösung beruht darauf, dass Maschinengeräusche, wie z.B. Getriebe- oder Lagergeräusche , mittels eines geeigneten Aufnehmers erfasst und in ein elektrisches Signal gewandelt werden. Hierbei werden durch geschädigte Lager- oder Maschinenteile impulsartige Geräuschanteile erzeugt, welche bevorzugt die Eigenresonanzen eines solchen Aufnehmers anregen. Dessen elektrisches Ausgangs-Signal wird durch einen Vorfilter und einen Demodulator behandelt. Das entstehende Signal entspricht dann im wesentlichen einer Impuls-Serie. In einer solchen Impuls-Serie repräsentiert ein einzelner Impuls ein durch schlagartige Bewegungsanteile hervorgerufenes Einzelgeräusch.

Bei periodisch wiederholten Pulsen dieser Art ist es mit einer nachgeschalteten Spektralanlysevorrichtung möglich, eine besonders ausgeprägte oder hervortretende Signalfrequenz zu ermitteln.

Diese Frequenz lässt - bei einer bekannten Grundfrequenz der Maschine oder einer bekannten Drehzahl und Kenngrössen eines Lagers - einen Rückschluss auf einen Defekt innerhalb der Maschine oder des Lagers zu.

In der US 5,679,900 wird beschrieben, wie sich die obengenannte Anordnung durch Verwendung eines umschaltbaren Filter in einer Papiermaschine verwenden lässt. Auch in dieser Schrift wird berücksichtigt, dass Maschinenfehler sich gegenüber regulären Maschinengeräuschen durch impulsartige Schwingungsanteile auszeichnen können, und dass man diese durch geeignete Schwingungsaufnehmer und durch geeignete Signalbehandlung aus dem Grundgeräusch von Maschinen und mechanischen Aggregaten hervorheben kann.

Den beschriebenen Vorrichtungen und Verfahren haftet jedoch der Nachteil an, dass zur aussagekräftigen Darstellung der gewonnenen Ergebnisse leistungsfähige und damit teure Spektralanalyse-Vorrichtungen vorzusehen sind oder zusätzlich aufwendige Filtereinheiten vorgeschaltet werden müssen.

Aus der US 4,386,526 ist eine Vorrichtung zum Erkennen von Maschinenschäden bekannt, wobei mittels eines Wandlers Maschinengeräusche in elektrische Signale umgewandelt werden, welche mittels eines Gleichrichters in Absolutwerte umgewandelt und anschließend einem Spitzenwertdetektor zugeführt werden, wobei aus den Signalen eine Impulsdichteverteilung ermittelt wird, die dann analysiert wird, um eine Bewertung des Maschinenzustands anhand der gemessenen Geräusche vorzunehmen. Ähnliche Vorrichtungen sind aus der US 3,677,072 und der US 5,251,151 bekannt.

Es ist Aufgabe der Erfindung, gleichzeitig die Qualität der Analyseergebnisse zu verbessern und durch eine kostengünstige elektronische Schaltung oder Datenverarbeitung den erforderlichen Aufwand zur Erkennung von Maschinenschäden, insbesondere von Lagerschäden, deutlich zu senken.

Es ist eine weitere Aufgabe der Erfindung, ein Gerät und ein zugehöriges Verfahren für eine verbesserte Signalanalyse bereitzustellen, welches insbesondere zur Detektion eines Frühstadiums eines sich anbahnenden Lager- oder Maschinenschadens geeignet ist.

Diese Aufgabe wird durch eine Vorrichtung gemäß Anspruch 1 gelöst. Des weiteren zeigen die abhängigen Ansprüche vorteilhafte Ausgestaltungen der Erfindung auf.

Die Vorrichtung kann einen oder mehrere zusätzlichen Referenz-Signal-Generatoren zur Erzeugung sägezahnartiger Referenzsignale mit steilem Anstieg und vergleichsweise langsamen Abfall aufweisen, ferner eine oder mehrere Trigger-Stufen zum repetitiven Anstossen der Referenz-Signal-Generatoren.

Die Vorrichtung kann eine Signalanalysestufe aufweisen, in welcher abgetastete, zeitdiskrete Signale dazu verwendet werden, eine oder mehrere der genannten Trigger-Stufen zu triggern. Die genannten Signale können dann mit den sägezahnartigen Referenzsignalen verglichen werden.

Die Vorrichtung ist mit einer oder mehreren Comparator-Stufen zur Überprüfung vorgegebener Grenzwerte auf Überschreitung, Unterschreitung, oder Gleichheit ausgestattet und kann insbesondere eine Signalgabestufe aufweisen. Diese dient zur Signalgabe, falls eine Überschreitung voreingestellter, in Form von Histogrammwerten hinterlegter Grenzwerte beobachtet oder ermittelt wird.

Die Vorrichtung kann eine digitale Recheneinheit aufweisen, mit welcher die Ermittlung von zeitlichen Ereignissen durchgeführt wird und mit welcher die Daten solcher Ereignisse weiterverarbeitet werden.

Die Grundlage der Erfindung beruht darauf, dass die zeitliche Länge der an Maschinen oder Lagern impulsartig auftretenden Signale, welche z.B. durch Fehlstellen oder Verformung von Lagerteilen bedingt sind, in der Regel vergleichsweise kurz ist. Deswegen stösst ihre Bestimmung mittels einer Fourier-Transformation wegen der weiteren an einem Lager oder einer Maschine vorhandenen Geräuschanteile auf grosse Schwierigkeiten.

Es ist daher erfindungsgemäss günstige, den Anteil der impulsartigen Signalanteile jeweils per Einzelereignis zu identifizieren. Mit solchen einzeln bestimmten Ereignissen ist es dann einfacher, die Parameter ihres zeitlichen Auftretens zu identifizieren. Mit den auf diese Weise erhaltenen Daten ist es auch in einem frühen Schadensstadium von Maschinen oder Lagern, insbesondere bei Wälzlagern möglich, auf zugrundeliegende Ursachen zu schliessen.

Jedoch genügt es zumeist nicht, eine einzelne Frequenz des Geräuschspektrums zu überprüfen. Vielmehr ist es so, dass beispielsweise bei Wälzlagern mindestens 4 grundlegende Frequenzen denkbar sind, welche einen Hinweis auf einen Schaden geben könnten. Diese Frequenzen sind zum Beispiel auf die Dimensionen des Innenringes, des Aussenringes, der Rollkörper und des Käfigs eines Wälzlagers bezogen. Da diese Frequenzen auch in beliebigen Kombinationen auftreten können, ist die Lehre der US 3,824,663 nur von bedingtem Nutzen.

Bei der Aufgabe, die einzelnen impulsartigen Geräuschanteile einer fehlerbehafteten Maschine oder eines Lagers zu identifizieren, wird gemäss der vorliegenden Erfindung daher vorgesehen, diese Geräuschanteile mittels einer Erkennung auf Zwischenmaxima oder -minima des erfassten und gefilterten Geräusch-Signals zu analysieren, ohne dass es einer aufwendigeren Frequenzanalyse-Einheit, wie eines FFT-Aalysators, bedarf. Eine erfindungsgemässe Lösung besteht darin, einen oder mehrere Spitzenwert-Detektoren bereitzustellen, welche ein vorgefiltertes Signal nach dessen Gleichrichtung oder Betragsbildung auf markante Zeitpunkte und zugehörige Signal-Intensitäten untersuchen.

Hierbei ist es von Vorteil, wenn die einzelnen Spitzenwert-Detektoren unterschiedliche Abfallzeiten aufweisen. Auf diese Weise können impulsartige Geräuschereignisse, im folgenden als kurz als Ereignisse bezeichnet, besser sowohl in verschiedenen Zeit-Analyse-Bereichen als auch in unterschiedlichen Intensitäts-Bereichen untersucht und identifiziert werden. Gemäss der Erfindung ist es von besonderem Vorteil, nicht einzelne Ereignisse und deren zugeordnete Entstehungszeiten zu untersuchen, sondern die Kombination von mindestens zwei Ereignissen, welche zeitlich benachbart sind, oder aber auch zeitlich auseinander liegen. Die Kombination der mindestens zwei Ereignisse wird dabei gemäss der Erfindung bevorzugt so vorgenommen, dass multiplikative Verknüpfung der beiden Intensitätswerte der jeweiligen Ereignisse durchgeführt wird. Aus einer zu ermittelnden Statistik der so gebildeten Produktwerte und der zugehörigen Zeitdifferenzen kann dann auf die Zusammensetzung beteiligter Wiederholzeiten und somit auf den Charakter eines zugrunde liegenden Maschinenschadens oder Wälzlagerschadens geschlossen werden. Unter Umständen genügt es dabei, eine entsprechend gebildete Häufigkeitsverteilung oder Statistik von Ereignisprodukten über zugeordnete Differenz-Zeiten daraufhin zu untersuchen, ob vordefinierte Zeit-Bereiche, welche einem der obengenannten Wälzlager-Schadensfrequenzen zugeordnet werden können, einen vorgegebenen Schwellwert bereits überschreiten, oder nicht.

Bei der Erfindung wird davon ausgegangen, dass es in der Regel genügt, eine Zeitspanne zu analysieren, welche nur einige bis einige hundert Sekunden umfasst. Die zu einer solchen Zeitspanne gehörenden Signale können nach an sich bekanntem Stand der Technik digitalisiert und in einen digitalen Speicher gespeichert werden. Weiterhin wird bei der Erfindung davon ausgegangen, dass eine Vielzahl der oben beschriebenen Mittel, Funktionen und Arbeitsabläufe nicht nur mit analog wirkenden elektronischen Einrichtungen ausführbar ist, sondern alternativ oder zusätzlich mit solchen auf digitaler, d.h. auf Computer-Basis. Die zuletzt genannte Lösung verwendet dann entsprechende Software zur sinngemässen Realisierung der erfindungsgemäss vorgesehenen Einrichtungen, Funktionen und Zusammenhänge.

Die Erfindung wird im folgenden anhand der Zeichnung eines Ausführungsbeispiels näher erläutert. Es zeigt
Fig. 1 ein Blockschaltbild eines bevorzugten Ausführungsbeispiels der Erfindung,
Fig. 2 ein Impulsdiagramm zur Erläuterung des erfindungsgemässen Verfahrens

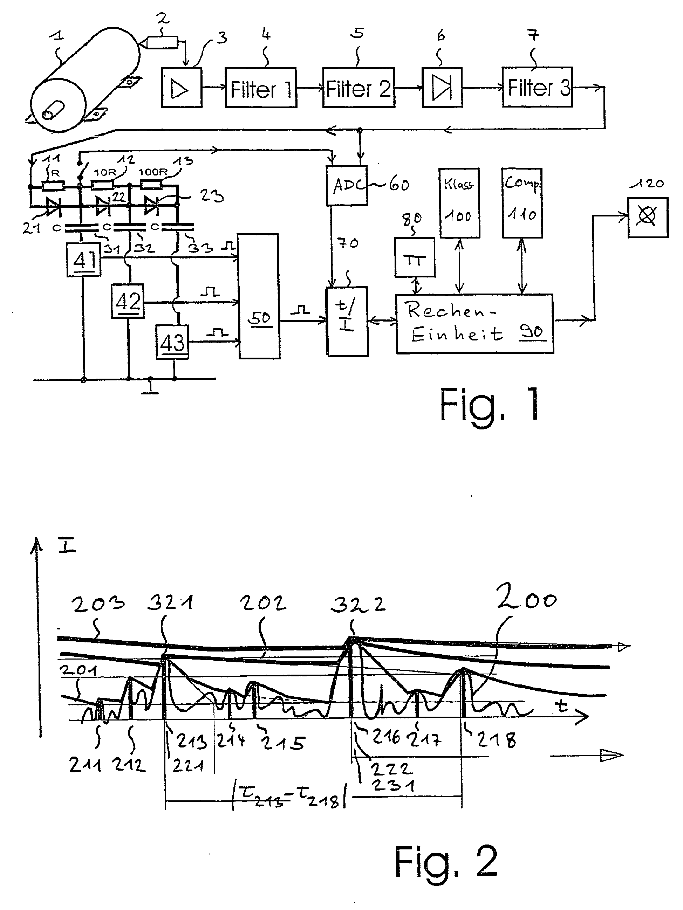

Das in Fig. 1 gezeigte Blockschaltbild weist einen fest oder nach dem Stand der Technik abnehmbar an einer Maschine 1 angebrachten Schwingungsaufnhmer 2 aus. Dieser kann beispielsweise als Beschleunigungsaufnehmer ausgestaltet sein, welcher von der Maschine 1, insbesondere auch von deren Lagern, hervorgerufene mechanische Schwingungen und Geräusche in ein elektrisches Signal umwandelt. Dieses wird einem Verstärker 3 zugeführt und dann einer geeigneten Filterkombination, z.B. Filter 4, 5, bestehend aus Hochpässen oder Bandpässen zugeführt, um hochfrequente Signalanteile herauszufiltern. Diese Vorgehensweise sowie die anschliessende Gleichrichtung oder Betragsbildung, ggf. Quadrierung des Signals, in einer Gleichrichterstufe 6 ist an sich bekannt, ebenso wie die Verwendung einer nachgeschalteten Tiefpass-Stufe 7.

Vom Ausgang der Tiefpass-Stufe, welche einen vergleichsweise niederohmigen Ausgang besitzt, wird das Signal jedoch einer Spitzenwert-Detektor-Einheit zugeführt, welche mindestens zwei separate Spitzenwert-Detektoren enthält. Die in Fig. 1 ausgewiesenen drei Spitzenwert-Detektoren bestehen z.B. aus den jeweiligen R-C-D Kombinationen mit Widerstand 11, Diode 21, Kondensator 31 bzw. den entsprechenden Komponenten 12, 22, 32 und 13, 23, 33. Die gezeigten Dioden 21, 22, 23 mögen annähernd ideale Eigenschaften aufweisen. Widerstand 12 ist z.B. 10-fach grösser als Widerstandswert 12 und z.B. 100 -fach grösser als Widerstandswert 11. Auf diese Weise sind den genannten RCD-Kombinationen unterschiedliche Entladezeitkonstanten zugeordnet. Diese haben im gezeigten Beispiel ein Verhältnis von 1:10:100. An den nicht gegen Bezugspotential geschalteten Kondensator-Anschlüssen können daher Signalspannungen abgegriffen werden, welche jeweils zwischenzeitlich maximal erreichten Spitzenwerten der Signalspannungen entsprechen. Aufgrund der unterschiedlichen Ladezeitkonstanten werden jedoch an den grösseren RC-Kombinationen grössere Spitzenspannungen registriert, wie bei der Beschreibung von Fig. 2 erläutert Die jeweils an den genannten Anschlüssen abgegriffenen Spitzenwerte sind daher mit grösserer Wahrscheinlichkeit ein Indikator für ein Geräuschereignis, welches impulsförmigen Charakter aufweist und mit entsprechender Wahrscheinlichkeit von einem repetitiven Maschinenschaden herrührt.

Wie Fig. 1 zeigt, werden gemäss der Erfindung durch eine Mehrzahl geeigneter Spitzenwertdetektoren jedoch nicht nur Ereignisse mit besonders grosser Intensität bestimmt, sondern auch solche, deren Intensität kleiner ist.

Um den jeweiligen Zeitpunkt des Auftretens einzelner, an den Kondensatoren anliegender Spitzensspannungswerte zu bestimmen, wird gemäss der Ausführungsform nach Fig. 1 zwischen Kondensator und Bezugspotentialleitung ein Strom-Nulldurchgangsdetektor 41, 42, 43 oder Differentiator geschaltet. Dessen Ausgangssignale sind im wesentlichen impulsförmig oder weisen zumindest eine steile Flanke auf Diese impulsförmigen Signale werden ggf. durch eine Signalaufbereitungsstufe 50 zusammengefasst oder direkt an eine Zeit-Impulshöhenspeichereinheit 70 weitergeleitet.
Mit dieser werden einerseits die Zeitpunkte registriert, welche dem Auftreten der beschriebenen Spitzenspannungswerte zugeordnet werden können. Andererseits werden gleichzeitig mittels einer geeigneten Einrichtung, zum Beispiel eines Analog-Digital-Wandlers 60, die zugehörigen tatsächlichen Impulshöhen des von Filter 3 (Bezugszeichen 7) abgegebenen Signals bestimmt.

Auf diese Weise wird über einen vorgegebenen Zeitraum, z.B. 1 bis 10 Sekunden, eine Mehrzahl von Daten erfasst, die eventuell das Ergebnis eines Maschinen- oder Lagerschadens sind und welche sowohl über die Zeitpunkte des Auftretens als auch die Intensitäten solcher Signale Auskunft geben.

Es ist vorteilhaft, für den Zeit-Impulshöhen- Speicher 50 bevorzugt digitale Einrichtungen vorzusehen.

Der Zeit-Impulshöhenspeicher 70 kann auch als Ringspeicher ausgelegt werden, so dass die Kennwerte des jeweils ältesten Signals mit denen eines aktuellen, jüngsten Signals überschrieben werden.

In jedem Falle werden die Daten eines aufgefüllten Zeit-Impulshöhen-Speichers 70 zur Erzeugung spezieller Produkt-Werte verwendet. Hierzu wird der Intensitätswert für jedes registrierte Ereignis (mit Ausnahme des ersten) mit dem des vorherig registrierten multipliziert. Dazu wird Multiplikator 80 verwendet. Der entsprechende Produktwert und die zugrundeliegende Zeitdifferenz wird einer Häufigkeitsanalyse zugeführt. Dies geschieht folgendermassen: Eine Klassifikationseinheit 100 besitzt einzelne Register, welche vorgegebenen Zeitklassen zugeordnet sind, z.B. 400 Zeitklassen mit gleicher (oder unterschiedlicher) Breite.

Ein einzelner Registerinhalt kann also nach Massgabe eines beobachteten oder aktuellen Zeitwertes verändert werden, z.B. durch Inkrementierung (Erhöhung seines Wertes um den Wert 1) oder durch Summierung (Erhöhung seines Wertes um einen Summanden, speziell eines durch Produktbildung bereitgestellten Summanden).

Da für die o.g. gebildeten Produkte auch der Wert der jeweilig zugehöriger Zeitdifferenz bekannt ist, wird nach Massgabe dieser Zeitdifferenz ein entsprechendes, zugehöriges Register der Klassifikationseinheit 110 durch Summierung erhöht, und zwar bevorzugt durch Summierung um den Wert des Produktes.

In den unterschiedlichen Registern der Klassifikationseinheit 100 wird also durch Einspeichern einer Vielzahl individueller Produkte eine Häufigkeitsverteilung (Histogramm) zahlenmässig abgebildet. Wenn alle Werte abgespeichert sind, werden spezielle Klassen oder Register der Häufigkeitsverteilung signifikant höhere Werte aufweisen, verglichen mit z.B. dem Mittelwert aller Klassen.

In einer Abwandlung des Verfahrens wird die Bildung der Intensitätsprodukte in ähnlicher Weise durchgeführt, jedoch mit dem Unterschied, dass nicht jeweilig vorhergehende Ereigniswerte oder Impulshöhen-Werte als Multiplikator verwendet werden, sondern deren Vorgänger, etc.

Zur Zuweisung eines gebildeten Produktes in die Häufigkeitsverteilung mittels der Klassifikationseinheit wird jedoch wiederum jeweils diejenige zugrundeliegende Zeitdifferenz verwendet, die für entsprechende Multiplikatoren und Multiplikanden im Zeit-Impulshöhenspeicher 70 hinterlegt wurde.

Wenn die Recheneinheit 90 mittels Multiplikator 80 (wie oben beschrieben) alle zu bildenden Produkte gebildet und der Klassifikationseinheit 100 zugeführt hat, wird mit der Vergleichseinheit 110 festgestellt, welche Zeit-Klassen der Klassifikationseinheit 100 am stärksten besetzt sind, sich also durch grösste Funktions- oder Häufigkeitswerte auszeichnen. Weiterhin wird festgestellt, ob sie sich signifikant vom Mittelwert der Häufigkeitswerte unterscheiden.

Es sei darauf hingewiesen, dass der oben beschriebene Rechnungsvorgang ausschliesslich mit Argumenten des Zeitbereichs arbeitet. Ebenso wird keine Produktbildung mit trigonometrischen Funktionen vorgenommen. Durch diese Massnahme, und die Beschränkung auf Multiplikationsterme mit besonderem Informationsgehalt, ergibt sich eine Einsparung an sonst erforderlicher Rechenleistung oder -zeit.

Ist für eine Maschine 1 deren Drehfrequenz/Drehzahl sowie deren Wälzlager-Parameter bekannt, so kann man gemäss bekannten Formeln vorhersagen, welche Wiederholzeiten oder -frequenzen für welche Lagerschäden zu erwarten sind. Gemäss der Erfindung ist es daher möglich, mittels der Vergleichsstufe 110 diejenigen in der Klassifikationseinheit 100 hinterlegten Zeit-Klassen zu überprüfen, welche den Wiederholzeiten entsprechen, die durch spezifische Lagerschäden verursacht werden.

Des weiteren ist es von Interesse, diejenigen Zeit-Klassen zu überprüfen, die einem Vielfachen solcher vorbestimmten Wiederholzeiten entsprechen.

Wird in einer oder mehreren solcher Klassen ein Häufigkeitswert festgestellt, welcher grösser ist als ein vorher definierter, oder der sich mit vorgegebener Signifikanz vom Mittelwert der Häufigkeiten unterscheidet, so kann dies als Indiz für einen beginnenden oder vorliegenden Lagerschaden aufgefasst werden. In diesem Falle kann die Recheneinheit 90 einen externen Signalgeber, z.B. Signallampe 120, aktivieren.

Fig. 2 zeigt die Ausgangssignale der einzelnen Spitzenwertdetektoren und den Zeitverlauf der zugehörigen Signalfunktionen.
Das am Ausgang des Filters 3 abgegriffene Signal ist positiv und in Fig. 2 mit Bezugsziffer 200 gekennzeichnet.
Das von Spitzenwertdetektor 11, 21, 31 erzeugte Signal weist eine vergleichsweise kleine Zeitkonstante auf und ist mit Bezugsziffer 201 gekennzeichnet.

Wie aus Fig. 2 ersichtlich, wird das Signal 201 durch Signalfunktion 200 jeweils bis zu Zwischenmaxima für die Zeitwerte 211, 212 usw. mitgeführt bzw. angehoben, um dann mit vorgegebener Zeitkonstante gegen den Wert Null abzufallen, bis ein erneutes Mitführen bis zu einem nachfolgenden Spitzenwert stattfindet. Wie ersichtlich, werden auf diese Weise auch Zwischenmaxima mit relativ kleiner Intensität spezifiziert und identifiziert. Dementsprechend ist der Mittelwert des Signals 201 auch vergleichsweise klein.

In ähnlicher Weise wird das durch Bezugsziffer 202 gekennzeichnete Signal nur zu den Zeitpunkten 221 (=213), 222(=216) durch die ansteuernde Signalfunktion bis zu entsprechenden Zwischenmaxima 321, 322 angehoben, um danach mit seiner voreingestellten Zeitkonstante abzufallen. Dieser zeitliche Abfall ist im gezeichneten Beispiel im wesentlichen exponentiell, kann aber auch einen linearen Verlauf aufweisen, oder gemäss einer anderen vorgegebenen, insbesondere monoton fallenden Zeitfunktion.

In ähnlicher Weise wird das durch Bezugsziffer 203 gekennzeichnete Signal nur zum Zeitpunkt 231 (= 222, = 216) durch die ansteuernde Signalfunktion bis zu seinem Zwischenmaximum mit dem Spitzenwert angehoben.

Da die dem Signal 203 zugrundeliegende Zeitkonstante grösser ist als die der Signale 201 und 202, repräsentiert dieses Signal 203 nur wenige Werte, welche sich aber durch eine vergleichsweise hohe Intensität auszeichnen.

## Patentansprüche

1. Vorrichtung zum Erkennen oder zur Analyse von Maschinenschäden, speziell zum Erkennen wiederholter, impulsartiger Anteile eines zeitvarianten Signals, insbesondere zum Erkennen von Maschinengeräuschen, welche durch Walzlagerschäden verursacht sind,
mit einem Sensor, insbesondere in Form eines Beschleunigungsaufnehmers, zum Erfassen und zum Umwandeln des zeitvarianten Signals in ein elektrisches Wechselspannungssignal, insbesondere mit mindestens einer Filterstufe und insbesondere mit einer Signalwandelstufe zum Erzeugen positiv definiter Signalanteile, **gekennzeichnet durch**
mindestens eine Spitzenwertdetektorstufe mit vorgegebener Entlade-Zeitkonstante zur Erkennung des zeitlichen Auftretens einzelner relativer Extremwerte des Wechselspannungssignals,
eine Speichereinheit zum Speichern der Zeitpunkte und der Intensität der erkannten einzelnen relativen Extremwerte über ein vorgegebenes Zeitfenster,
eine Recheneinheit zum multiplikativen Verknüpfen der den erkannten einzelnen relativen Extremwerten zugeordneten Signal-Intensitäten zu Produktwerten,
eine Klassifikationseinheit zur Verarbeitung der Produktwerte, und zur Berechnung und Speicherung mindestens einer Häufigkeitsverteilung,
und **durch** eine Mustererkennungseinheit zur Analyse der mindestens einen Häufigkeitsverteilung nach vorgegebenen Kriterien, insbesondere nach vordefinierten absoluten Häufigkeitswerten.

2. Vorrichtung nach Anspruch 1, **dadurch gekennzeichnet, dass** die Mustererkennungseinheit ausgebildet ist, um die Häufigkeitsanalyse anhand von Zeit-Klassen durchzuführen, wobei die Zeit-Klassen gemäss vorgebbarer Beurteilungskriterien frei wählbar oder einteilbar sind.

3. Vorrichtung nach einem der vorhergehenden Ansprüche, **dadurch gekennzeichnet, dass** die Mustererkennungseinheit für die Häufigkeitsanalyse anhand einer gewichteten Häufigkeitsverteilung ausgebildet ist.

4. Vorrichtung nach einem der vorhergehenden Ansprüche, **dadurch gekennzeichnet, dass** die Mustererkennungseinheit ausgebildet ist, um die Häufigkeitsanalyse zur Bewertung eines Maschinen- oder Lagerzustandes nur mit solchen periodischen Ereignissen durchzuführen, welche einen signifikanten Abstand zu einem Rauschpegel aufweisen.

5. Vorrichtung nach einem der vorhergehenden Ansprüche, mit einer Einheit zur Erfassung und zur anteiligen Subtraktion von Zeitwerten, welche einem Vielfachen eines Grund- oder Basis-Zeitwertes entsprechen.

6. Vorrichtung nach einem der vorhergehenden Ansprüche, mit einer Bewertungseinheit, welche zu einem Grund-Zeitwert zugehöriges Häufigkeitsmass dahingehend auswertet, ob, welcher Art, und welchen Ausmasses ein Maschinen- oder Lagerschaden vorliegt

7. Vorrichtung nach einem der vorhergehenden Ansprüche, mit einer Registrierungseinheit zum Speichern ausgewählter Zeit- und Intensitätswerte über einen längeren Zeitraum gespeichert werden, so dass eine langfristige Aufzeichnung und Analyse des Maschinenbauteil-Schädigungsgrades durchführbar ist.

8. Vorrichtung nach einem der vorhergehenden Ansprüche, **dadurch gekennzeichnet, dass** die Vorrichtung ausgebildet ist, um zwei oder mehr, nicht unmittelbar aufeinanderfolgende zeitliche Ereignisse aus einem Signal dazu heranzuziehen, um ein Produkt oder eine Produktsumme zur die Intensitäten solcher Ereignisse zu ermitteln, zu speichern und einer Häufigkeitsanalyse mit nachfolgender Bewertung zuzuführen.

9. Vorrichtung nach einem der vorhergehenden Ansprüche, **dadurch gekennzeichnet, dass** mehrere Spitzenwertdetektorstufen mit jeweils unterschiedlichen Abfall-Zeitkonstanten vorgesehen sind.

10. Vorrichtung nach Anspruch 9, **dadurch gekennzeichnet, dass** die Abfall-Zeitkonstanten einer von einer Signalfunktion abgeleiteten oder beeinflussten Funktion grössenordnungsmässig mit Periodendauern oder Wiederholzeiten der Auswirkungen von zu untersuchenden Maschinenschäden oder -fehlern übereinstimmen.

11. Vorrichtung nach einem der vorhergehenden Ansprüche, mit einer Einrichtung zur digitalen oder analogen Vorverarbeitung, zur Gleichrichtung oder zur Betragsbildung eines Geräusch-Signals.

12. Vorrichtung nach einem der vorhergehenden Ansprüche, mit einer Einrichtung zur Bildung und Auswertung mehrerer Häufigkeitsverteilungen in einer Mehrzahl von Schadensdauerkategorien.

13. Vorrichtung nach Anspruch 9, mit einer Auswahlstufe, welche dafür sorgt, dass ein zeitlich definiertes Ereignis nur denjenigen Spitzenwert beeinflusst oder triggert, der sich durch eine grössere Zeitkonstante auszeichnet.

14. Vorrichtung nach einem der vorhergehenden Ansprüche, mit einer Analyse-Einheit, welche solange eine Anzahl Ereignisse ermittelt und solange eine Anzahl miteinander verknüpfter Ereignisse einer histogrammässigen Analyse zuführt, bis - gemäss vorgebbarer Kriterien - ein Ergebnis oder eine Bewertung der histogrammässigen Analyse als stationär oder als statistisch relevant angesehen werden kann.

15. Vorrichtung nach einem der vorhergehenden Ansprüche, mit einer oder mehreren Komparator-Stufen zur Überprüfung vorgegebener Grenzwerte auf Überschreitung, Unterschreitung, oder Gleichheit, insbesondere mit einer Signalgabestufe, welche im Falle einer Überschreitung voreingestellter, in Form von Histogrammwerten hinterlegter Grenzwerte ein optisches oder akustisches Signal ausgeben kann.

16. Vorrichtung nach einem der vorhergehenden Ansprüche, mit einer digitalen Recheneinheit zur Erzeugung von zeitvariablen Schwellwertsignalen, welche als Vergleichssignale zur Ermittlung von zeitlichen Ereignissen herangezogen werden, und zur Ermittlung solcher zeitlicher Ereignisse.

## Claims

1. Apparatus for detecting or analysing machine damage, in particular for detecting repeated pulse-like components of a time-variant signal, particularly for detecting machine noise caused by rolling bearing damage,
said apparatus having a sensor, in particular in the form of an acceleration pick-up, for detecting and converting the time-variant signal into an electrical AC voltage signal, in particular having at least one filter stage and, in particular, having a signal conversion stage for generating positively defined signal components, **characterized by**
at least one peak value detector stage which has a predefined discharge time constant and is intended to detect the temporal occurrence of individual relative extreme values of the AC voltage signal,
a memory unit for storing the times and intensity of the individual relative extreme values detected over a predefined time window,
a computation unit for multiplicatively combining the signal intensities, which are assigned to the individual relative extreme values detected, to form product values,
a classification unit for processing the product values and for calculating and storing at least one frequency distribution,
and a pattern recognition unit for analysing the at least one frequency distribution in accordance with predefined criteria, in particular in accordance with predefined absolute frequency values.

2. Apparatus according to Claim 1, **characterized in that** the pattern recognition unit is designed to carry out the frequency analysis using time classes, the time classes being able to be freely selected or organized according to predefinable assessment criteria.

3. Apparatus according to one of the preceding claims, **characterized in that** the pattern recognition unit is designed for the frequency analysis using a weighted frequency distribution.

4. Apparatus according to one of the preceding claims, **characterized in that** the pattern recognition unit is designed to carry out the frequency analysis, for the purpose of assessing a machine or bearing state, only with those periodic events which have a significant spacing from a noise level.

5. Apparatus according to one of the preceding claims, having a unit for detecting and proportionately subtracting time values which correspond to a multiple of a basic time value.

6. Apparatus according to one of the preceding claims, having an assessment unit which evaluates a frequency measure associated with a basic time value in order to determine the type and extent of machine or bearing damage.

7. Apparatus according to one of the preceding claims, having a registration unit for storing selected time and intensity values over a relatively long period of time, with the result that it is possible to carry out long-term recording and analysis of the degree of damage to machine components.

8. Apparatus according to one of the preceding claims, **characterized in that** the apparatus is designed to use two or more temporal events from a signal, which do not directly follow one another, for the purpose of determining a product or a product sum for the intensities of such events, to store said product or product sum and to supply it to a frequency analysis with subsequent assessment.

9. Apparatus according to one of the preceding claims, **characterized in that** a plurality of peak value detector stages with respective different fall time constants are provided.

10. Apparatus according to Claim 9, **characterized in that** the fall time constants of a function which is derived from or influenced by a signal function correspond, in terms of the order of magnitude, to period durations or repetition times of the effects of machine damage or faults to be investigated.

11. Apparatus according to one of the preceding claims, having a device for digital or analogue preprocessing, rectification or magnitude formation of a noise signal.

12. Apparatus according to one of the preceding claims, having a device for forming and evaluating a plurality of frequency distributions in a plurality of damage duration categories.

13. Apparatus according to Claim 9, having a selection stage which ensures that a temporally defined event influences or triggers only that peak value which is distinguished by a greater time constant.

14. Apparatus according to one of the preceding claims, having an analysis unit which determines a number of events and supplies a number of combined events to a histogram analysis until - in accordance with predefinable criteria - a result or an assessment of the histogram analysis can be considered to be steady or statistically relevant.

15. Apparatus according to one of the preceding claims, having one or more comparator stages for checking whether predefined limit values are exceeded, undershot or equalled, in particular having a signal emission stage which can output an optical or acoustic signal in the event of preset limit values which are stored in the form of histogram values being exceeded.

16. Apparatus according to one of the preceding claims, having a digital computation unit for generating time-variable threshold value signals which are used as comparison signals for determining temporal events, and for determining such temporal events.

## Revendications

1. Dispositif de détection ou d'analyse des dommages d'une machine, notamment pour détecter des composantes impulsionnelles répétitives d'un signal variable dans le temps, notamment pour détecter des bruits de machine qui sont provoqués par des dommages sur des paliers de roulement, comprenant un capteur, notamment sous la forme d'un enregistreur d'accélération, pour détecter et pour convertir le signal variable dans le temps en un signal électrique de tension alternative, comprenant notamment au moins un étage de filtrage et comprenant notamment un étage de conversion de signal pour générer des composantes de signal définies positives, **caractérisé par** au moins un étage détecteur de valeur de crête avec une constante de temps de décharge prédéfinie pour détecter l'apparition dans le temps des valeurs extrêmes relatives individuelles du signal de tension alternative, une unité de mémorisation pour mémoriser les moments et l'intensité des valeurs extrêmes relatives individuelles détectées sur un créneau temporel prédéfini, une unité de calcul pour la combinaison multiplicative des intensités de signal associées aux valeurs extrêmes relatives individuelles détectées à des valeurs de produit, une unité de classification pour traiter les valeurs de produit et pour calculer et mémoriser au moins une distribution de fréquence et par une unité de reconnaissance de modèle destinée à analyser l'au moins une distribution de fréquence d'après des critères prédéfinis, notamment d'après des valeurs de fréquence absolues prédéfinies.

2. Dispositif selon la revendication 1, **caractérisé en ce que** l'unité de reconnaissance de modèle est configurée pour effectuer l'analyse de la fréquence au moyen de classes de temps, les classes de temps pouvant être sélectionnées ou triées librement en fonction de critères d'évaluation pouvant être prédéfinis.

3. Dispositif selon l'une des revendications précédentes, **caractérisé en ce que** l'unité de reconnaissance de modèle est configurée pour effectuer l'analyse de la fréquence au moyen d'une distribution de fréquence pondérée.

4. Dispositif selon l'une des revendications précédentes, **caractérisé en ce que** l'unité de reconnaissance de modèle est configurée pour n'effectuer l'analyse de la fréquence en vue d'évaluer un état de la machine ou du palier qu'avec des événements périodiques qui indiquent un écart important par rapport à un niveau de bruit.

5. Dispositif selon l'une des revendications précédentes, comprenant une unité pour détecter et pour soustraire proportionnellement des valeurs de temps qui correspondent à un multiple d'une valeur de temps fondamentale ou de base.

6. Dispositif selon l'une des revendications précédentes, comprenant une unité d'évaluation qui interprète l'indice de fréquence appartenant à une valeur de temps fondamentale en vue de découvrir le type et l'étendue d'un dommage à la machine ou au palier.

7. Dispositif selon l'une des revendications précédentes, comprenant une unité d'enregistrement pour mémoriser les valeurs sélectionnées du temps et de l'intensité sur une période prolongée de manière à pouvoir effectuer un enregistrement et une analyse à long terme du degré d'endommagement des composants de la machine.

8. Dispositif selon l'une des revendications précédentes, **caractérisé en ce que** le dispositif est configuré pour utiliser deux événements ou plus d'un signal qui ne se suivent pas immédiatement dans le temps pour déterminer un produit ou une somme de produits pour les intensités de tels événements, les mémoriser puis effectuer une analyse de la fréquence suivie d'une évaluation.

9. Dispositif selon l'une des revendications précédentes, **caractérisé en ce que** plusieurs étages détecteurs de valeur de crête sont prévus, respectivement avec des constantes de temps de descente différentes.

10. Dispositif selon la revendication 9, **caractérisé en ce que** l'ordre de grandeur des constantes de temps de descente d'une fonction dérivée d'une fonction du signal ou influencée par celle-ci coïncide avec des durées de période ou des temps de répétition des effets des dommages ou défauts de machine à analyser.

11. Dispositif selon l'une des revendications précédentes, comprenant un dispositif de prétraitement numérique ou analogique, de redressement ou de calcul de la valeur d'un signal de bruit.

12. Dispositif selon l'une des revendications précédentes, comprenant un dispositif pour calculer et analyser plusieurs distributions de fréquence dans une pluralité de catégories de durées de dommage.

13. Dispositif selon la revendication 9, comprenant un étage de sélection qui contribue à ce qu'un événement défini dans le temps n'influence ou ne déclenche que la valeur de crête qui se **caractérise par** une constante de temps plus élevée.

14. Dispositif selon l'une des revendications précédentes, comprenant une unité d'analyse qui détermine un certain nombre d'événements et achemine un certain nombre d'événements liés logiquement entre eux à une analyse par histogramme jusqu'à ce qu'un résultat ou une évaluation de l'analyse par histogramme puisse, selon des critères à prédéfinir, être considéré comme stationnaire ou comme statistiquement significatif.

15. Dispositif selon l'une des revendications précédentes, comprenant un ou plusieurs étages comparateurs pour contrôler le franchissement vers le haut, le franchissement vers le bas ou l'égalité avec des valeurs limites prédéfinies, comprenant notamment un étage émetteur de signal qui, en cas de franchissement vers le haut de valeurs limites préréglées enregistrées sous la forme de valeurs d'histogramme, peut délivrer un signal visuel ou sonore.

16. Dispositif selon l'une des revendications précédentes, comprenant une unité de calcul numérique destinée à générer des signaux de valeur de seuil variables dans le temps qui sont utilisés comme signaux comparatifs pour déterminer des événements dans le temps et destinée à déterminer de tels événements dans le temps.
